# EUROPEAN PATENT APPLICATION

(11) **EP 1 411 519 A2**
(43) Date of publication of application: **21.04.2004**
(21) Application number: 03254111.2
(22) Date of filing: 27.06.2003
(51) Int. Cl.: G11B 20/14, G11B 27/19, G11B 27/30, G11B 7/007

(54) **Apparatus and method for modulating and demodulating address data for a disc type recording medium**

(30) Priority: 21.08.2002 KR 2002049425
(71) Applicant: SAMSUNG ELECTRONICS CO., LTD., Suwon-City, Kyungki-do (KR)
(72) Inventor: Kim, Jin-han, 221-1004 Daerim Apt., Gyeonggi-do (KR); Shim, Jae-seong, Seoul (KR); Park, Hyun-soo, 701 Dongil Apt., Seoul (KR)
(74) Representative: Robinson, Ian Michael

(57) **Abstract**

Provided are an apparatus and method for modulating and demodulating address data. The apparatus for modulating address data includes an address data generating unit (110), an error correction coding unit (120), a modulating unit (130), and a wobble signal generating unit (140). The address data generating unit (110) generates address data and the error correction coding unit (120) performs error correction coding of the address data received from the address data generating unit (110). The modulating unit (130) generates a first modulated signal using a first modulation technique and a second modulated signal using a second modulation technique, after receiving the coded address data in a unit of at least 2 bits from the error correction coding unit (120). The wobble signal generating unit (140) generates a unit wobble signal by synthesizing the first and second modulated signals received from the modulating unit (130).

## Description

The present invention relates to an apparatus and method for modulating and demodulating address data. More particularly, the present invention relates to an apparatus and method for modulating address data, by which the address data of data to be recorded on a disc type recording medium is modulated into a wobble signal and a disc track is shaped in the form of the wobble signal, and an apparatus and method for demodulating address data therefor.

In a disc type recording medium such as a compact disc (CD), address data is recorded on a header region that is separate from the disc track on which data is recorded.

Recently a new approach for recording address data has been introduced, which involves recording address data by modulating address data into a wobble signal and shaping the disc track in the form of the wobble signal. Address data can be modulated into the wobble signal by using monotone wobble (MW), saw tooth wobble (STW), binary phase shift keying (BPSK), or frequency shift keying (FSK). Theses approaches are advantageous with respect to disc access such as motor speed control.

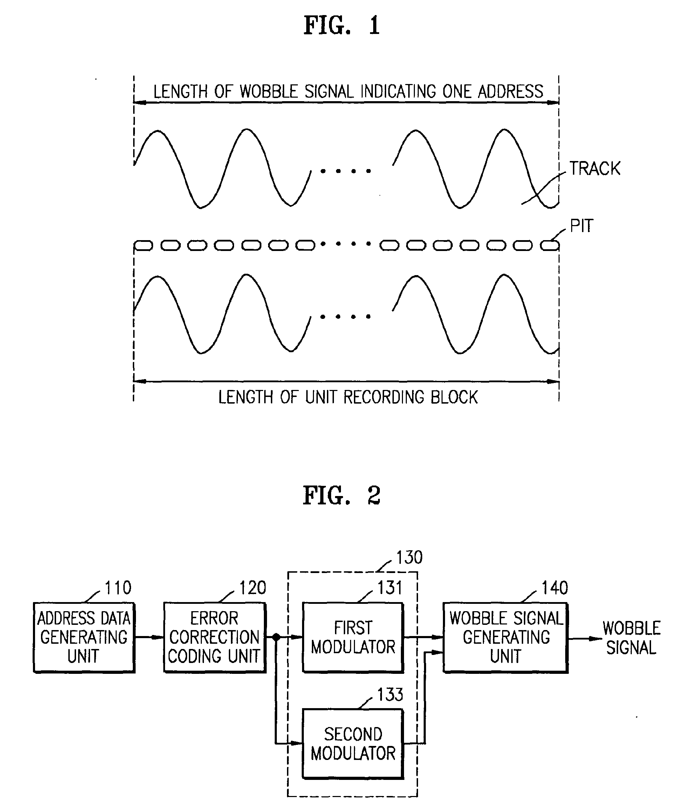

Figure 1 is a view for explaining the disc track shaped in the form of the wobble signal and pits formed in the disc track, according to prior art. By using MW, address data is modulated into the wobble signal in the form of a sine wave with a single frequency while pits are formed in the middle of the disc track, resulting in the disc track is shaped in the form of the wobble signal. Plural pits corresponding to one address are grouped as a unit recording block. Respective lengths of the unit recording block and the disc track including the unit recording block change with the amount of data to be recorded in the unit recording block. In general, the length of the wobble signal indicating one address is equal to that of one unit recording block. In addition, address data is modulated into a unit wobble signal that includes a predetermined number of carrier signals. Each bit of address data or additional data is modulated into the predetermined number of carrier signals. For example, each bit of address data or additional data may be modulated into a unit wobble signal that comprises 56 carrier signals.

According to recent specifications for high-density DVDs, 64 kbits of data are recorded based on the address data indicated by the unit wobble signal. Thus, if one address is affected by a defect in a disk track, 64 kbits of data is inaccessible. In the case of high-density DVDs, capable of recording data in the tens of Gbits, the damage to 64 kbits of data is not a big problem compared to the case of a disc with a small recording capacity. In order to solve such a problem, the amount of data recorded at one address may be reduced. In this case, the length of the unit recording block is reduced in accordance with a reduction in the amount of recorded data. However, the length of the unit wobble signal indicating one address does not change. Thus, discrepancy occurs between the length of address data indicated by the unit wobble signal and the length of data to be recorded at the address. Moreover, according to the prior art described above, since the unit wobble signal including predetermined number of carrier signals indicates one bit of address data, reducing the length of the wobble signal indicating one bit of address data to equalize the length of the wobble signal with a reduced length of a unit recording block does not make it possible to indicate one bit of address data with the unit wobble signal.

According to the present invention there is provided an apparatus and method as set forth in the appended claims. Preferred features of the invention will be apparent from the dependent claims, and the description which follows.

The present invention provides an apparatus and method for modulating address data by which address data of at least 2 bits is modulated into a unit wobble signal and the length of address data on a disc track, which is shaped in the form of the unit wobble signal, is reduced, thereby reducing inaccessibility to data as a result of a defect in a disc track.

The present invention also provides an apparatus and method for demodulating address data, thereby reducing inaccessibility to data as a result of a defect in a disc track.

According to an aspect of the present invention, there is provided an apparatus of modulating address data of disc-type recording media, the apparatus comprising an address data generating unit which generates address data, an error correction coding unit which performs error correction coding of the address data received from the address data generating unit, a modulating unit which generates a first modulated signal using a first modulation technique and a second modulated signal using a second modulation technique, after receiving the coded address data in a unit of at least 2 bits from the error correction coding unit, and a wobble signal generating unit which generates a unit wobble signal by synthesizing the first and second modulated signals received from the modulating unit.

According to another aspect of the present invention, there is provided a method of demodulating address data for disc type recording media, the method comprising (a) after receiving a unit wobble signal indicating address data of at least 2 bits which is generated by synthesizing signals modulated by using first and second modulation technique, demodulating the signal modulated by using the first modulation technique into data of at least 2 bits, using a first demodulation technique, and demodulating the signal modulated by using the second modulation technique into data of at least 2 bits, using a second demodulation technique, (b) determining address data based on the data demodulated by using the first and second demodulation techniques, (c) if values of the data of at least 2 bits demodulated by using the first and second demodulation techniques are different from each other, generating an eraser flag signal indicating mismatched bit positions, and (d) outputting address data after performing error correction decoding on the address data determined in step (b) and generating the eraser flag signal in step (c).

According to yet another aspect of the present invention, there is provided an apparatus of demodulating address data for disc type recording media, the apparatus comprising a demodulating unit which, after receiving a unit wobble signal indicating address data of at least 2 bits generated by synthesizing signals modulated by first and second modulation technique, demodulates the signal modulated by using the first modulation technique, into data of at least 2 bits, using a first demodulation technique, and demodulates the signal modulated by using the second modulation technique into data of at least 2 bits, using a second demodulation technique, a data determining unit which determines address data based on the data demodulated by using the first and second demodulation techniques and generates an eraser flag signal indicating mismatched bit positions if values of the data demodulated by using the first and second demodulation techniques are different from each other, and an error correction decoding unit which performs error correction decoding of the determined address data and the eraser flag signal, and outputs address data.

For a better understanding of the invention, and to show how embodiments of the same may be carried into effect, reference will now be made, by way of example, to the accompanying diagrammatic drawings in which:
Figure 1 is a view for explaining a disc track shaped in the form of a wobble signal and the pits formed in the disc track according to prior art;
Figure 2 is a block diagram of an apparatus for modulating address data according to the present invention;
Figures 3A and 3B are views for explaining a unit wobble signal generated by a method of modulating address data, according to a first embodiment of the present invention;
Figures 4A through 4C are views for explaining an example of pattern signals formed by using binary phase shift keying (PBSK) ;
Figures 5A and 5B are views for explaining an example of pattern signals formed by using frequency shift keying (FSK) ;
Figure 6 is a view for explaining a unit wobble signal generated by a method of modulating address data, according to a second embodiment of the present invention;
Figures 7A and 7B are views for explaining a unit wobble signal generated by a method of modulating address data, according to a third embodiment of the present invention;
Figure 8 is a view for explaining a unit wobble signal generated by a method of modulating address data, according to a fourth embodiment of the present invention;
Figures 9A and 9B are views for explaining a unit wobble signal generated by the method for modulating address data, according to a fifth embodiment of the present invention;
Figures 10A through 10D are views for explaining a unit wobble signal generated by a method of modulating address data, according to a sixth embodiment of the present invention;
Figure 11 is a block diagram of an apparatus for demodulating address data according to the present invention;
Figure 12 is a flowchart showing a method of modulating address data according to the present invention; and
Figure 13 is a flowchart showing a method of demodulating address data according to the present invention.

A unit wobble signal is a portion of a wobble signal output from a wobble signal generating unit 140 and includes pattern signals that have been modulated from when a pattern signal, is generated, indicating the start of address data, to right before another pattern signal is generated, indicating the start of the next address data.

Hereinafter, the configuration and operation of an apparatus for modulating address data according to the present invention will be described with reference to Figures 2 through 10D.

Figure 2 is a block diagram of the apparatus for modulating address data according to the present invention, where the apparatus for modulating address data includes an address data generating unit 110, an error correction coding unit 120, a modulating unit 130, and the wobble signal generating unit 140. The modulating unit 130 includes a first modulator 131 and a second modulator 133.

The address data generating unit 110 generates address data in a predetermined order. The address data may include various additional data. The number of bits of address data indicating one address is determined based on the number of unit recording blocks and additional data. For example, the number of bits of address data indicating one address may be 32 bits.

The error correction coding unit 120 receives address data from the address data generating unit 110 and performs error correction coding (ECC), e.g., Reed-Solomon coding. For example, if address data is coded into an RS code (15, 9, 7), it is formed from a total of 15 symbols including 6 parity symbols and 9 data symbols added thereto. When address data coded into the RS code (15, 9, 7) is decoded, at least 3 error data symbols are corrected. If there is an eraser flag in the error data, the maximum number of corrected error data symbols is 6, the same as the number of parity symbols.

The modulating unit 130 receives address data coded by the error correction coding unit 120 and generates first and second modulated signals by using first and second modulation techniques. The modulating unit 130 receives and modulates coded address data in a unit of 2 bits. However, the modulating unit 130 may process address data in the unit of more than 2 bits. In order to indicate address data of 2 bits using one unit wobble signal, address data of 2 bits that is coded by the error correction coding unit 120 is input to the first and second modulators 131 and 133. The first modulator 131 receives the address data of 2 bits and modulates the address data of 2 bits using the first modulation technique, in accordance with its predetermined modulating algorithm. The second modulator 133 also receives the address data of 2 bits and modulates the address data of 2 bits by using the second modulation technique, in accordance with its predetermined modulating algorithm.

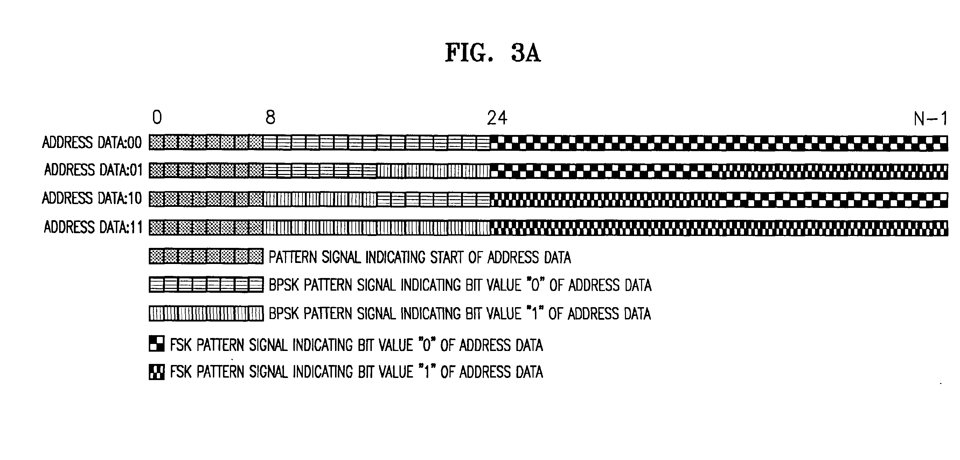

Figures 3A through 10D show unit wobble signals indicating address data in the unit of 2 bits, which are generated by a method of modulating address data according to the present invention. In Figures 3A through 10D, the first modulation technique is BPSK and the second modulation technique is FSK.

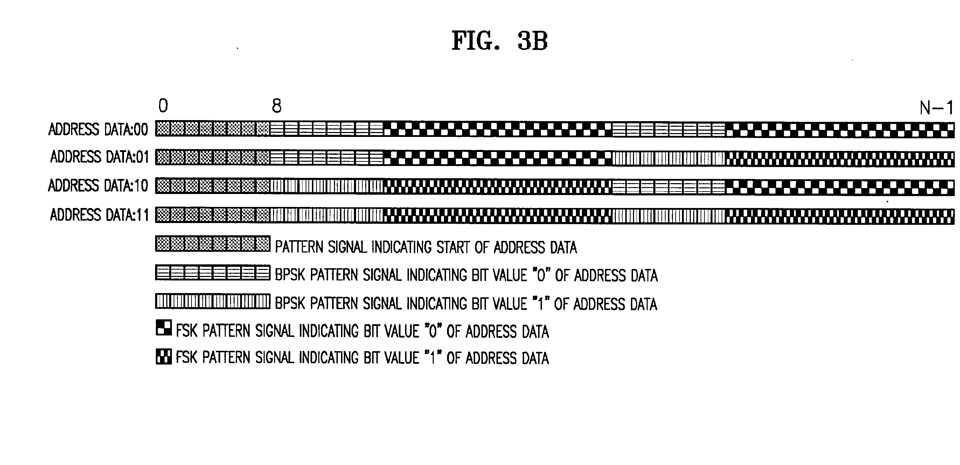

Figures 3A and 3B are views for explaining a unit wobble signal generated by a method of modulating address data, according to a first embodiment of the present invention. The unit wobble signal indicates the start of the address data of 2 bits by using BPSK and the actual address data of 2 bits by using BPSK or FSK. Each small box indicates a carrier signal, and one unit wobble signal includes N carrier signals. N may vary with the shape of a disc, such as a high-density DVD or a high-density disc of a small size, and specifications defining the indication of address data.

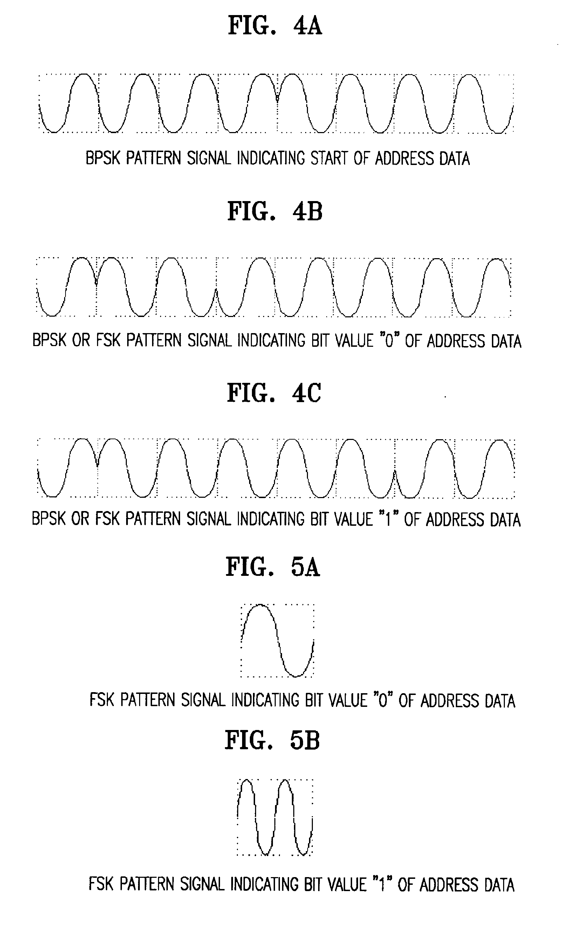

In Figures 3A and 3B, the unit wobble signal uses three pattern signals formed by using BPSK (hereinafter, referred to as BPSK pattern signals) and two pattern signals formed by using FSK (hereinafter, referred to as FSK pattern signals) for indication of address data. Figures 4a through 4C shows three pattern signals. Figure 4A shows the BPSK pattern signal indicating the start of the address data of 2 bits. Figure 4B shows the BPSK or FSK pattern signal indicating a bit value "0" of the address data of 2 bits. Figure 4C shows the BPSK or FSK pattern signal indicating a bit value "1" of address data of 2 bits. Each BPSK or FSK pattern signal includes 8 carrier signals. Figures 5A and 5B show two FSK pattern signals. Figure 5A shows the FSK pattern signal indicating the bit value "0" of the address data of 2 bits, by using a frequency "f". Figure 5B shows the FSK pattern signal indicating the bit value "1" of the address data of 2 bits, by using a frequency "2f".

In Figure 3A, the BPSK pattern signal is immediately followed by another BPSK pattern signal. In Figure 3B, by contrast, the BPSK and FSK pattern signals alternate in the unit wobble signal.

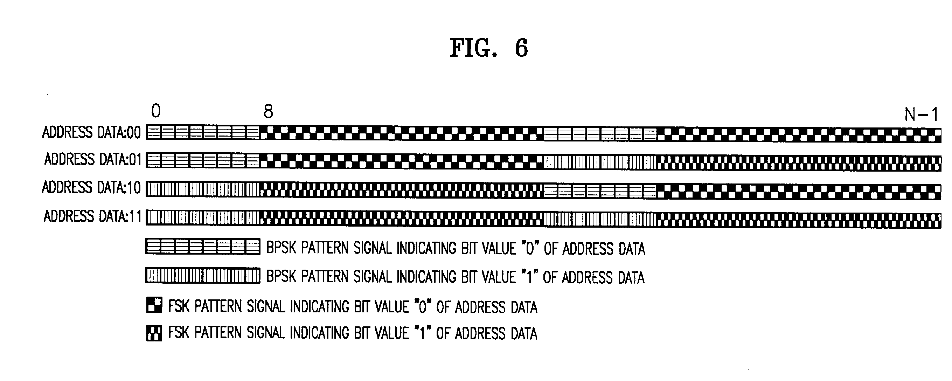

Figure 6 is a view for explaining a unit wobble signal generated by a method of modulating address data, according to a second embodiment of the present invention. The unit wobble signal indicates the start of the address data of 2 bits by using BPSK pattern signals and the address data of 2 bits by using BPSK or FSK pattern signals. As compared with the first embodiment of the present invention shown in Figures 3A and 3B, the start of the address data of 2 bits is not indicated by using a BPSK pattern signal, but by using BPSK signals indicating the bit value "0" or "1" of the address data of 2 bits.

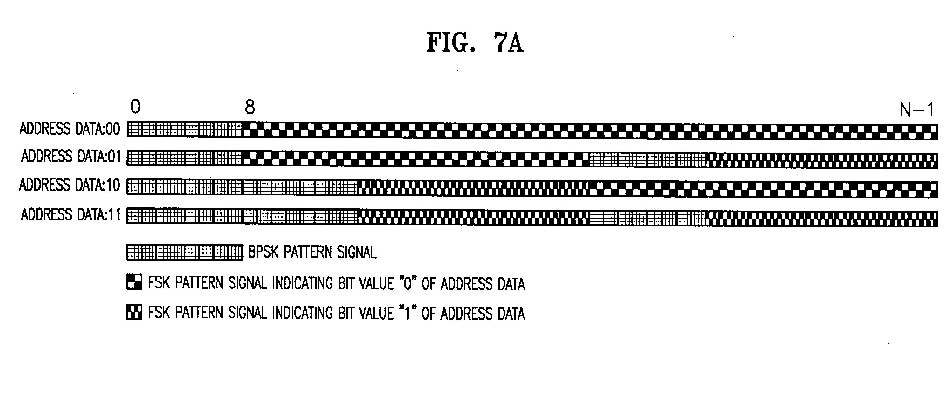

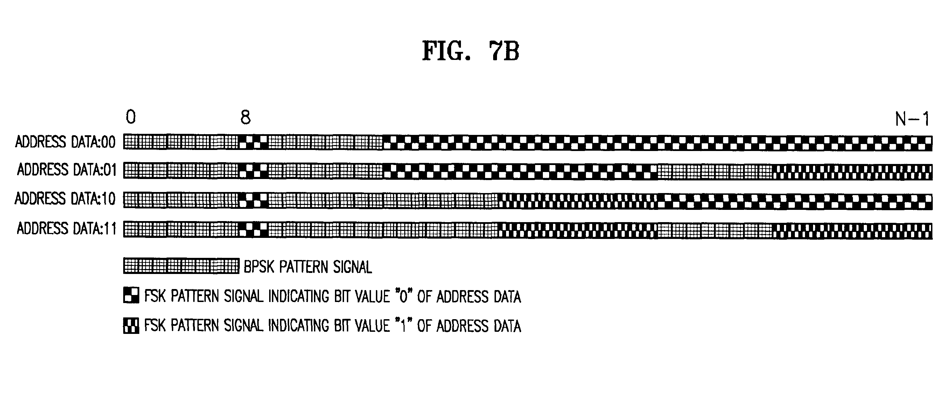

Figures 7A and 7B are views for explaining a unit wobble signal generated by a method of modulating address data, according to a third embodiment of the present invention. The unit wobble signal indicates the start of address data of 2 bits by using a BPSK pattern signal or a combination of BPSK and FSK pattern signals. The address data formed of different bit values, such as "01" or "10", is designated by inserting the BPSK pattern signal in specific locations, such as next to the pattern signal indicating the start of the address data of 2 bits or next to the FSK pattern signal. The address data formed of the same bit value, such as "00" or "11", is designated by repeating one FSK pattern signal indicating the same bit value "0" or "1".

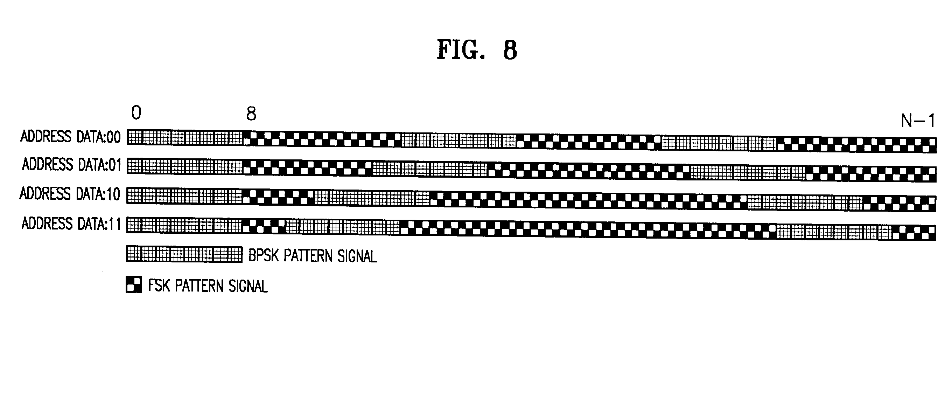

Figure 8 is a view for explaining a unit wobble signal generated by a method of modulating address data, according to a fourth embodiment of the present invention. The unit wobble signal indicates the start of the address data of 2 bits by using a BPSK pattern signal, and the actual address data of 2 bits by inserting the BPSK pattern signal in specific locations and inserting a FSK pattern signal between the BPSK pattern signals.

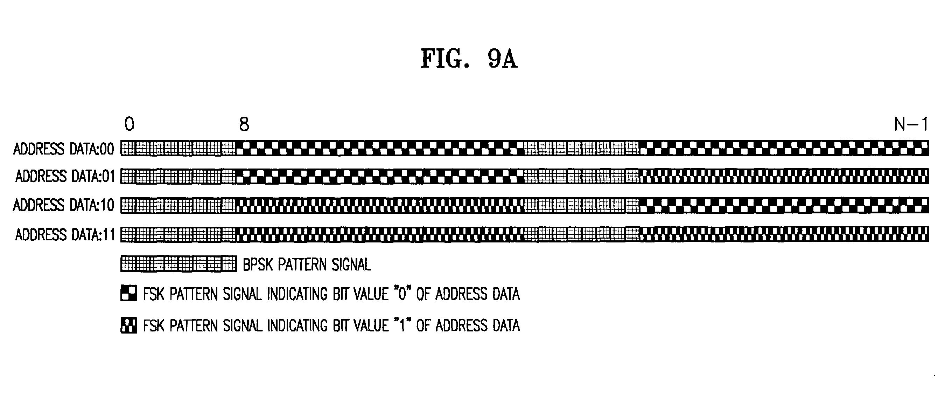

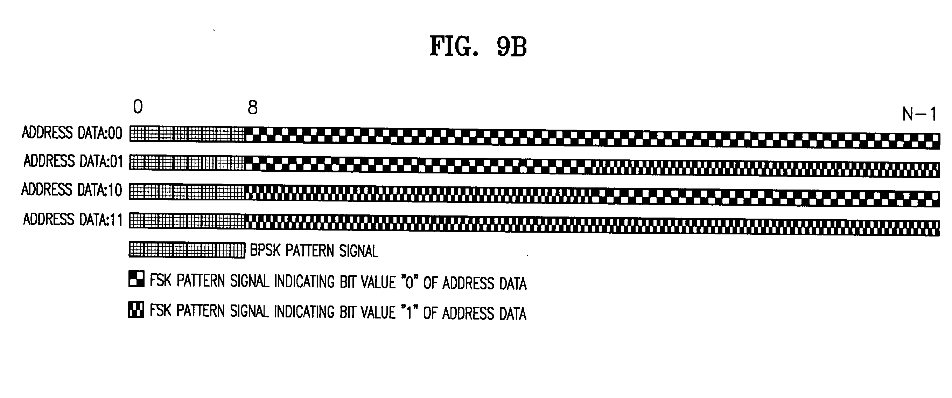

Figures 9A and 9B are views for explaining a unit wobble signal generated by a method of modulating address data, according to a fifth embodiment of the present invention. The unit wobble signal indicates the start of each bit of the address data of 2 bits, or the start of the address data of 2 bits by using a BPSK pattern signal and the actual address data of 2 bits by using FKS pattern signals.

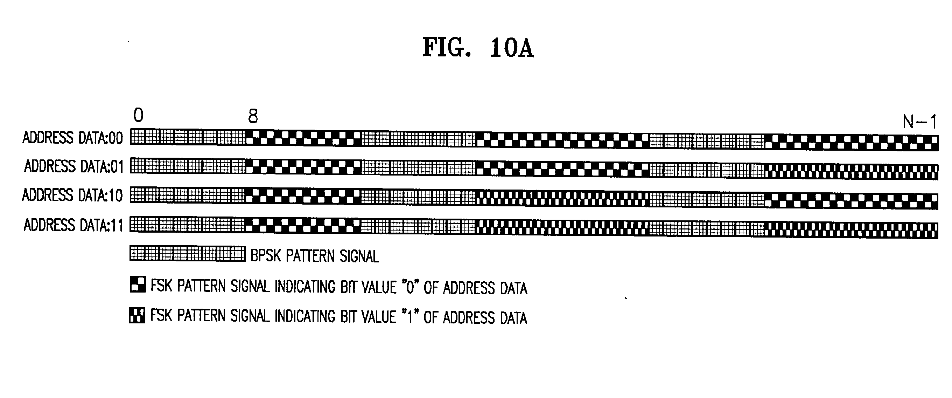

Figures 10A through 10D are views for explaining a unit wobble signal generated by a method of modulating address data, according to a sixth embodiment of the present invention.

In Figure 10A, the unit wobble signal indicates the start of the address data of 2 bits by using three pattern signals and the actual address data of 2 bits by using FSK pattern signals indicating the bit value "0" or "1". The two FSK pattern signals indicating bit value "0" or "1" respectively are distinguished by inserting a BPSK pattern signal between the two FSK pattern signals.

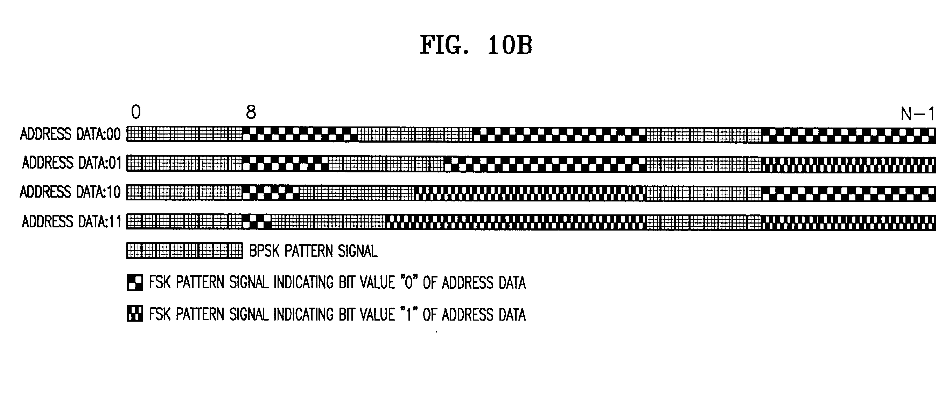

In Figure 10B, the unit wobble signal indicates the start of the address data of 2 bits by using the BPSK pattern signal and the actual address data of 2 bits by disposing the FSK pattern signals in specific locations. Address data formed of the same bit value, such as "00" or "11", is designated by repeating one FSK pattern signal indicating the same bit value "0" or "1" and inserting the BPSK pattern signal between the FSK pattern signals indicating the same bit value.

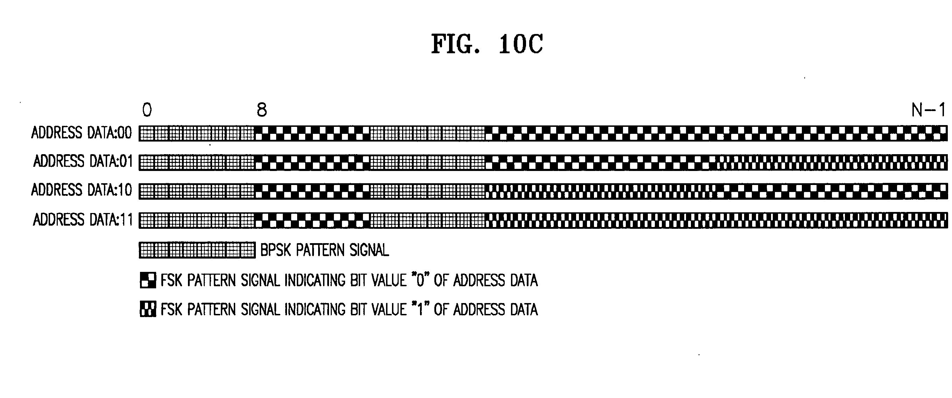

Figure 10C is different from Figure 10A in that the BPSK pattern signal inserted between the FSK pattern signals is removed.

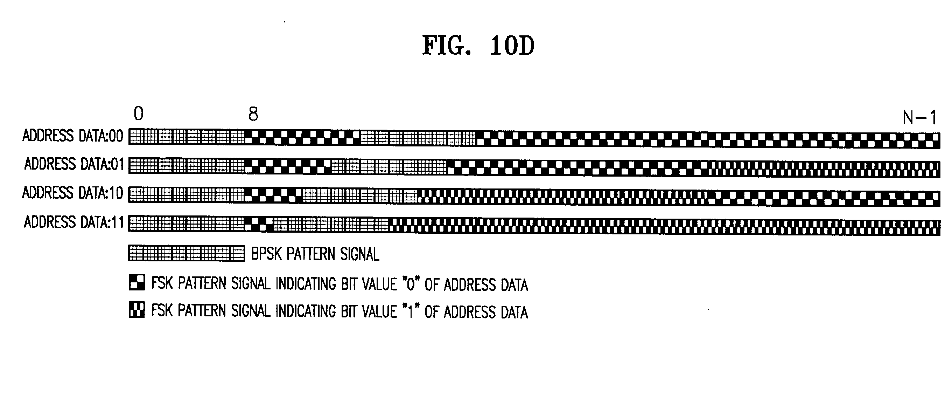

Figure 10D is different from Figure 10B in that the BPSK pattern signal inserted between the FSK pattern signals is removed.

In order to generate BPSK or FSK pattern signals used by the unit wobble signals according to the first through sixth embodiments of the present invention, the first modulator 131 generates the BPSK pattern signals, and the second modulator 133 generates the FSK pattern signals.

The wobble signal generating unit 140 receives generated BPSK or FSK pattern signals, synthesizes them in accordance with its predetermined algorithm, and generates the unit wobble signals shown in Figure 3A, Figure 3B, and Figures 6 through 10D.

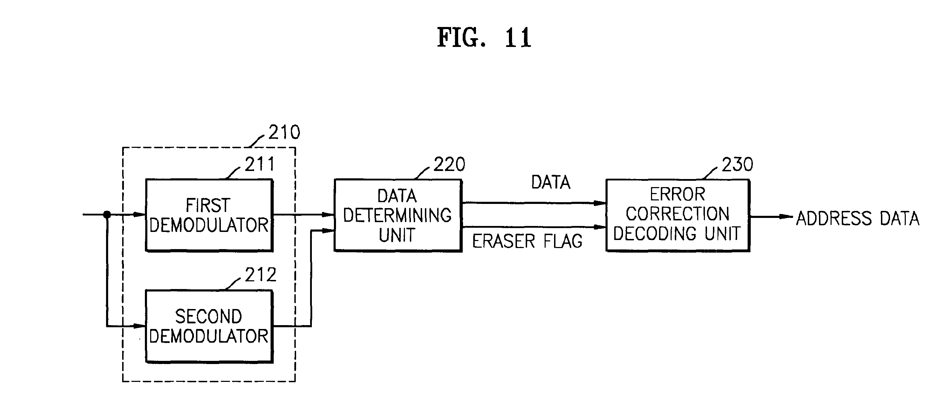

Hereinafter, an apparatus for demodulating address data according to the present invention will be described with reference to Figure 11.

Referring to Figure 11, the apparatus for demodulating address data according to the present invention includes a demodulating unit 210, a data determining unit 220, and an error correction decoding unit 230. The demodulating unit 210 includes a first demodulator 211 and a second demodulator 212.

When the apparatus for demodulating address data reads the unit wobble signals, previously modulated by the apparatus for modulating address data in Figure 2, from a disc and demodulates them, the demodulating operation is performed in the reverse order of the modulating operation described above.

The demodulating unit 210 receives the wobble signal read from a disc (not shown) on which address data is recorded in the form of wobble signals, by a pick-up (not shown) having an optical head. The unit wobble signal includes at least one unit wobble signal among the unit wobble signals shown in Figure 3A, Figure 3B, and Figures 6 through 10D. The wobble signal is input to both the first demodulator 211 and the second demodulator 212 by which the unit wobble signal constituting the wobble signal is demodulated. The first demodulator 211 demodulates the pattern signal modulated by using the first modulation technique BPSK, and the second demodulator 212 demodulates the pattern signal modulated by using the second modulation technique FSK.

The data determining unit 220 receives 2-bit values of address data demodulated by the demodulating unit 210 and interprets the address data. If the address data of 2 bits is indicated by using the two modulation techniques of BPSK and FSK, as shown in Figures 3A and 3B, then 2-bit values of address data, for example, "00", "01", "10", "11" are input to the data determining unit 220, from both the first demodulator 211 and the second demodulator 212. If the 2-bit values input to the first and second modulators 211 and 212 are different from each other, the data determining unit 220 generates an eraser flag signal indicating that an error exists in a specific location of the data, and outputs one of the 2-bit values with the eraser flag signal to the error correction decoding unit 230. For example, if the 2-bit value input to the first demodulator 211 is "10", but the 2-bit value input to the second demodulator 212 is "11", the data determining unit 220 outputs either the 2-bit value "10" or "11" with an eraser flag signal to the error correction decoding unit 230. The error flag signal indicates that an error exists in the second bit value position of the 2-bit value. Generating the eraser flag signal can improve the error correction capability of the error correction decoding unit 230.

The error correction decoding unit 230 receives the 2-bit value and the eraser flag signal, performs error correction decoding, and outputs the address data. Error correction decoding is dependent on error correction coding and may be Reed-Solomon decoding.

Hereinafter, a method for modulating address data according to the present invention will be described with reference to Figures 2 through 10D and Figure 12.

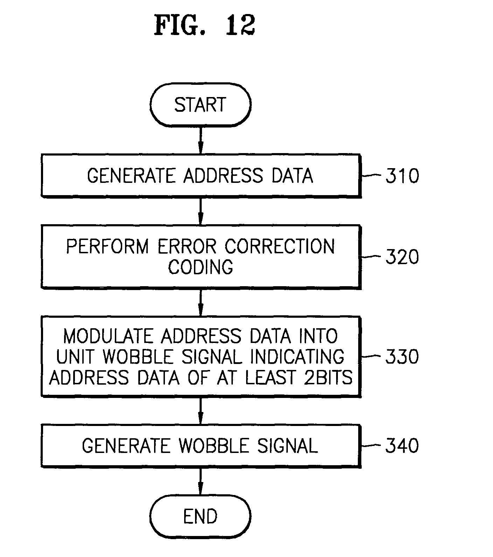

Figure 12 is a flowchart showing the method for modulating address data used by the apparatus for modulating the address data of Figure 2, according to the present invention.

First, in step 310, the address data generating unit 110 generates address data in a predetermined order.

Next, in step 320, the error correction coding unit 120 performs error correction coding of the address data received from the address data generating unit 110. Error correction coding may be Reed-solomon coding.

In step 330, the modulating unit 130 modulates the coded address data received from the error correction coding unit 120 into the unit wobble signal indicating address data of at least 2 bits. Figure 3A, Figure 3B, and Figures 6 through 10D show unit wobble signals indicating address data of 2 bits.

In step 340, the wobble signal generating unit 140 generates the unit wobble signal by synthesizing pattern signals that have been generated from the first and second modulators 131 and 133, in accordance with a predetermined algorithm.

Hereinafter, a method for demodulating address data according to the present invention will be described with reference to Figures 3A through 11.

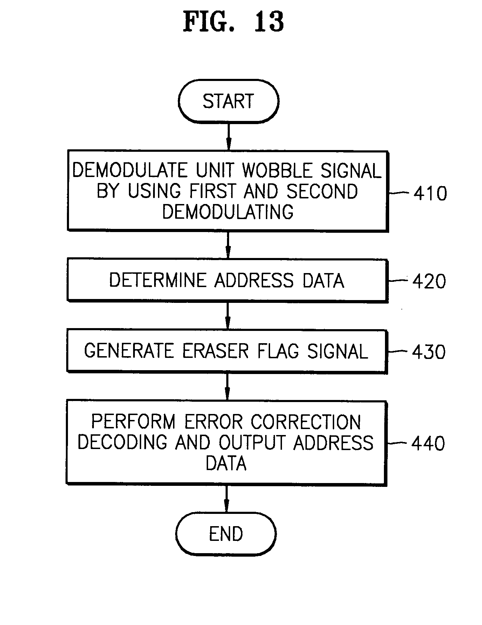

Figure 13 is a flowchart showing the method for demodulating address data used by the apparatus for demodulating address data of Figure 11, according to the present invention.

First, in step 410, the first and second demodulators 211 and 212 of the demodulating unit 210 demodulate the unit wobble signal of the wobble signal read from the disc, by using the first and second demodulation techniques. The unit wobble signal is one of the unit wobble signals shown in Figure 3A, Figure 3B, and Figures 6 through 10D. The first demodulator 211 demodulates a pattern signal modulated by using BPSK, and the second demodulator 212 demodulates a pattern signal modulated by using FSK.

Next, in step 420, the data determining unit 220 determines address data after receiving 2-bit values of address data demodulated by the demodulating unit 210.

In step 430, if the 2-bit values input to the first and second demodulators 211 and 212 are different from each other, the data determining unit 220 generates the eraser flag signal indicating that an error exists in a specific location of the 2-bit values.

Thereafter, in step 440, the error correction decoding unit 230 performs error correction decoding of one of the 2-bit values with the eraser flag signal received from the data determining unit 220 and outputs address data. Error correction decoding may be Reed-solomon decoding.

The present invention may be embodied in a general purpose digital computer by running a program from a computer readable recording medium. The computer readable recording medium includes but not limited to storage media such as ROM's, RAM's, CD-ROMs, magnetic tapes, floppy discs, optical data storage media, and carrier waves (e.g., transmissions over the Internet). In addition, the computer readable medium may be distributed in computer systems connected to networks, stored, and executed in the form of computer readable code.

As described above, according to the apparatus and method for modulating address data and the apparatus and method for demodulating address data therefor, the length of address data on a disc track, which is shaped in the form of the unit wobble signal, is reduced by indicating an address of at least 2 bits with a unit wobble signal. Thus, it is possible to reduce damage to data as a result of a defect in a disc track. Also, more data can be recorded in the shape of wobble signals, which allows an increase in the amount of data added to address data.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for modulating address data for a disc type recording medium, the method comprising:
(a) generating address data;
(b) performing error correction coding of the address data;
(c) receiving the coded address data in a unit of at least 2 bits, and generating a first modulated signal corresponding to the unit using a first modulation technique and a second modulated signal corresponding to the unit using a second modulating signal; and
(d) generating a unit wobble signal by synthesizing the first and second modulated signals.

2. The method of claim 1, wherein step (c) is **characterized by** generating the first modulated signal by generating a signal indicating each bit value of the coded address data using the first modulation technique and generating the second modulated signal by generating a signal indicating each bit value of the coded address data using the second modulation technique.

3. The method of claim 1, wherein step (c) is **characterized by** generating the first modulated signal by generating a predetermined pattern signal if a bit value of the coded address data is equal to a first bit value and not generating the predetermined pattern signal if the bit value of the coded address data is equal to a second bit value, using the first modulation technique, and generating the second modulated signal by generating the signal indicating each bit value of the coded address data, using the second modulation technique.

4. The method of claim 1, wherein step (c) is **characterized by** generating the first modulated signal by generating a signal used to distinguish signals indicating each bit value from one another, using the first modulation technique, and generating the second modulated signal by generating signals having different lengths for each at least 2-bit values of coded address data, using the second modulation technique.

5. The method of claim 1, wherein step (c) is **characterized by** generating the first modulated signal by generating at least two pattern signals indicating at least 2-bit values of coded address data, using the first modulation technique, and generating the second modulated signal by generating at least two signals used to distinguish signals indicating a bit value of address data, using the second modulation technique, and, in step (d), the coded address data of at least 2 bits is indicated by disposing at least two pattern signals in predetermined locations and inserting at least two signals, used to distinguish signals indicating a bit value of address data, between at least two pattern signals.

6. The method of claim 2, wherein step (d) is **characterized by** generating the unit wobble signal by disposing the first and second modulated signals adjacent to each other.

7. The method of claim 2, wherein step (d) is **characterized by** generating the unit wobble signal by alternating the first and second modulated signals.

8. The method of claim 4, wherein step (c) further comprises (c1) generating signals indicating each bit of the coded address data.

9. The method of any of claims 2 to 5, wherein step (c) further comprises (c2) generating a signal indicating the start of coded address data using one of the first and second modulation techniques and a third modulation technique.

10. The method of any of claims 2 to 5, wherein the first modulation technique is binary phase shift keying (BPSK), and the second modulation technique is frequency shift keying (FSK).

11. An apparatus of modulating address data of disc-type recording media, the apparatus comprising:
an address data generating unit (110) which generates address data;
an error correction coding unit (120) which performs error correction coding of the address data received from the address data generating unit (110);
a modulating unit (130) which generates a first modulated signal using a first modulation technique and a second modulated signal using a second modulation technique, after receiving the coded address data in a unit of at least 2 bits from the error correction coding unit (120); and
a wobble signal generating unit (140) which generates a unit wobble signal by synthesizing the first and second modulated signals received from the modulating unit (130).

12. The apparatus of claim 11, wherein the modulating unit (130) comprises:
a first modulator (131) which generates the first modulated signal by generating signals indicating each bit value of coded address data, using the first modulation technique; and
a second modulator (133) which generates the second modulated signal by generating signals indicating each bit value of coded address data, using the second modulation technique.

13. The apparatus of claim 11, wherein the modulating unit (130) comprises:
a first modulator (131) which generates the first modulated signal by generating a predetermined pattern signal if a bit value of the coded address data is equal to a first bit value and not generating the predetermined pattern signal if the bit value of the coded address data is equal to a second bit value, using the first modulation technique; and
a second modulator (133) which generates the second modulated signal by generating a signal indicating each bit value of the coded address data, using the second modulation technique.

14. The apparatus of claim 11, wherein the modulating unit (130) further comprises:
a first modulator (131) which generates the first modulated signal by generating a signal used to distinguish signals indicating a bit value of address data, using the first modulation technique; and
a second modulator (133) which generates the second modulated signal by generating signals with different lengths indicating each at least 2-bit values of coded address data, using the second modulation technique.

15. The apparatus of claim 11, wherein the modulating unit (130) further comprises:
a first modulator (131) which generates the first modulated signal by generating at least two pattern signals indicating at least 2-bit values of coded address data, using the first modulation technique; and
a second modulator (133) which generates the second modulated signal by generating at least two signals, used to distinguish signals indicating a bit value of address data, using the second modulation technique;
wherein, the coded address data of at least 2 bits is indicated by disposing at least two pattern signals in predetermined locations and inserting at least two signals, used to distinguish signals indicating a bit value of address data, between at least two pattern signals.

16. The apparatus of claim 12, wherein the wobble signal generating unit (140) generates the unit wobble signal by disposing the first and second modulated signals adjacent to each other.

17. The apparatus of claim 12, wherein the wobble signal generating unit (140) generates the unit wobble signal by alternating the first and second modulated signals.

18. The apparatus of claim 14, wherein the second modulator (133) further generates signals indicating each bit of the coded address data.

19. The apparatus of any of claims 12 to 15, wherein the first modulator (131) further generates a signal indicating the start of the coded address data using one of the first and second modulation techniques and a third modulation technique.

20. The apparatus of any of claims 12 to 15, wherein the first modulation technique is binary phase shift keying (BPSK) and the second modulation technique is frequency shift keying (FSK).

21. A method of demodulating address data for disc type recording media, the method comprising:
(a) after receiving a unit wobble signal indicating address data of at least 2 bits which is generated by synthesizing signals modulated by using first and second modulation technique, demodulating the signal modulated by using the first modulation technique into data of at least 2 bits, using a first demodulation technique, and demodulating the signal modulated by using the second modulation technique into data of at least 2 bits, using a second demodulation technique;
(b) determining address data based on the data demodulated by using the first and second demodulation techniques;
(c) if values of the data of at least 2 bits demodulated by using the first and second demodulation techniques are different from each other, generating an eraser flag signal indicating mismatched bit positions; and
(d) outputting address data after performing error correction decoding on the address data determined in step (b) and generating the eraser flag signal in step (c).

22. The method of claim 21, wherein step (a) is **characterized by** demodulating the signal modulated by using the first modulation technique into a first bit value of address data, using the first demodulation technique, if a predetermined pattern signal exists;
demodulating the signal modulated by using the first modulation technique into a second bit value of address data, using the first demodulation technique, if the predetermined pattern signal does not exist; and demodulating each bit value of the signal modulated by using the second modulation technique, using the second demodulation technique.

23. The method of claim 21 or 22, wherein the first demodulation technique is binary phase shift keying (BPSK) and the second demodulation technique is frequency shift keying (FSK).

24. An apparatus of demodulating address data for disc type recording media, the apparatus comprising:
a demodulating unit (210) which, after receiving a unit wobble signal indicating address data of at least 2 bits generated by synthesizing signals modulated by first and second modulation technique, demodulates the signal modulated by using the first modulation technique, into data of at least 2 bits, using a first demodulation technique, and demodulates the signal modulated by using the second modulation technique into data of at least 2 bits, using a second demodulation technique;
a data determining unit (220) which determines address data based on the data demodulated by using the first and second demodulation techniques and generates an eraser flag signal indicating mismatched bit positions if values of the data demodulated by using the first and second demodulation techniques are different from each other; and
an error correction decoding unit (230) which performs error correction decoding of the determined address data and the eraser flag signal, and outputs address data.

25. The apparatus of claim 24, the demodulating unit (210) comprises:
a first demodulator (211) which demodulates the data by using the first demodulation technique; and
a second demodulator (212) which demodulates the data by using the second demodulation technique.

26. The apparatus of claim 24, wherein the demodulating unit (210) comprises:
a first demodulator (211) which demodulates the signal modulated by using the first modulation technique into a first bit value of address data, using the first demodulation technique, if a predetermined pattern signal exists, and demodulates the signal modulated by using the first modulation technique into a second bit value of address data, using the first demodulation technique, if the predetermined pattern signal does not exist; and
a second demodulator (212) which demodulates each bit value of the signal modulated by using the second modulation technique, using the second demodulation technique.

27. The apparatus of one of claims 24 to 26, wherein the first demodulation technique is binary phase shift keying (BPSK) and the second demodulation technique is frequency shift keying (FSK).

28. A computer readable recording medium having recorded thereon address data modulated by the method of any of claims 1 to 10 in the shape of wobble signals.

29. A computer readable recording medium having embodied thereon a computer program for performing the modulating method of any of claims 1 to 10, and/or a computer program for performing the demodulating method of any of claims 21 to 23.

30. A computer readable recording medium having embodied thereon a computer program for performing the modulation techniques of any of claims 24 to 27.
